(19)

Europäisches
Patentamt

European
Patent Office

Office européen
des brevets

(11) **EP 4 393 969 A1**

(12) **EUROPEAN PATENT APPLICATION**

(43) Date of publication:
**03.07.2024 Bulletin 2024/27**

(21) Application number: **22216773.6**

(22) Date of filing: **27.12.2022**

(51) International Patent Classification (IPC):
***C08F 210/06*** (2006.01)

(52) Cooperative Patent Classification (CPC):
(C-Sets available)
**C08F 210/06; C08F 8/02; C08F 290/04;**
C08F 2800/20; C08F 2810/10 (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **WANG, Jingbo**
**4021 Linz (AT)**

• **BERNREITNER, Klaus**
**4021 Linz (AT)**
• **NIEDERSUESS, Peter**
**4021 Linz (AT)**
• **ORTNER, Stefan**
**4021 Linz (AT)**
• **LESKINEN, Pauli**
**06101 Porvoo (FI)**
• **NUMMILA-PAKARINEN, Auli**
**06850 Kullo (FI)**
• **SOBCZAK, Lukas**
**4021 Linz (AT)**

(74) Representative: **Kador & Partner Part mbB**
**Corneliusstraße 15**
**80469 München (DE)**

(54) **PROPYLENE COMPOSITION**

(57)    A polypropylene (PP) composition comprising a long-chain branched terpolymer of propylene, ethylene and 1-butene (LCB-TER), wherein the composition has a $MFR_2$, determined according to ISO1133, in a range of from 5 to 30 g/10min, a melting temperature Tm in a range of from 100 to 150°C and a crystallization temperature Tc in a range of from 90 to 120°C. A process for producing said PP composition involving a post-reactor treatment. Polymer film comprising said PP composition and a method for producing the same.

EP 4 393 969 A1

**(Cont. next page)**

(52) Cooperative Patent Classification (CPC): (Cont.)

C-Sets
**C08F 210/06, C08F 2/001;**
**C08F 210/06, C08F 4/6465;**
**C08F 210/06, C08F 4/651;**
**C08F 210/06, C08F 4/6543;**
C08F 210/06, C08F 210/08, C08F 210/16,
C08F 2500/09, C08F 2500/11, C08F 2500/12,
C08F 2500/26, C08F 2500/27, C08F 2500/33,
C08F 2500/34, C08F 2500/35, C08F 2500/36

C-Sets
**C08F 210/06, C08F 2/001;**

**Description**

**Field of the invention**

The present invention relates to a polypropylene composition comprising a long-chain branched terpolymer of propylene, ethylene and 1-butene, a process for producing the same, polymer films comprising the composition, as well as their production and use thereof, in particular in packaging applications.

**Background**

Propylene homopolymers and copolymers are suitable for many applications such as packaging, textile, automotive, laboratory equipment and pipes. With regard to the field of packaging, it is particularly noted that the polymers are suitable for film preparation as they combine a variety of properties including good stiffness and toughness, high transparency, good sealing and good surface gloss. Moreover, they are sterilisable. However, it is also known that polypropylene materials exhibit a series of disadvantages during thermoplastic processing, such as an increased instability of the melt and the therewith associated smaller processing window related to process output, bubble stability and downgauging. Therefore it is necessary to improve the melt strength of polypropylene.

This objective can be reached by subjecting the polypropylene to a post-reactor modification process such as a high melt strength (HMS) process. This process generates branching in the polypropylene material resulting in a long-chain branched propylene polymer (LCB-PP). The long-chain branching is generally associated with improved melt-strength. Hence, long-chain branched polypropylenes are often used for making films.

Long-chain branched polymer compositions may be prepared directly in the polymerization reactor or obtained via a post-reactor modification process.

EP1903070 B1, EP1900764 B1 and EP1903579 B1 describe in-reactor made LCB polypropylene compositions produced in the presence of single-site catalysts.

EP1939230 B1 provides details on an in-reactor process for producing HMS polypropylene in the presence of specific metallocene catalysts.

WO2014/001394 A1 describes a high melt strength (HMS) post-reactor modification process wherein peroxide and butadiene are used to make long-chain branched polypropylene (b-PP) materials. The long chain-branched polypropylenes from WO2014/001394 are used to prepare films with reduced gel index.

EP3018154 A1 describes long-chain branched polypropylene compositions and a process for making the same via post-reactor modification. The polypropylene compositions may comprise homo- and/ or copolymers of propylene and are used for film formation.

In packaging applications, films, in particular multi-layered films, are commonly used. Multi-layered films may provide access to materials exhibiting a beneficial combination of properties. However, in order to achieve this, multi-layered films often employ a variety of different materials. For example, different polymer types (PET in combination with PE/ PP) or one or more type of polymer in combination with paper! cardboard are used in such multi-layered films/ packaging materials. The drawback of such multi-material solutions is the limited recyclability. Thus, there is a need to provide mono-material solutions for film/ packaging applications that are easily recyclable since they comprise only one type of polymer. One approach to meet this need is the modification of material properties of a given polymer type.

**Summary of the invention**

The present invention is based on the finding that the above objectives can be achieved by subjecting a polypropylene, being a terpolymer of propylene, ethylene and 1-butene, to a post-reactor peroxide treatment in the presence of at least one unsaturated monomer.

The present invention thus provides a polypropylene composition comprising a long-chain branched (LCB) terpolymer of propylene, ethylene and 1-butene having a $MFR_2$, determined according to ISO1133, in a range of from 5.0 to 30.0 g/10min, a melting temperature Tm in a range of from 125 to 150°C and a crystallization temperature Tc in a range of from 90 to 120°C, determined according to ISO 11357-3.

The present invention is further concerned with a process for producing a polypropylene composition as described herein comprising the steps of (a) providing a terpolymer of propylene, 1-butene and ethylene (TER1) having a $MFR_2$, determined according to ISO1133, in a range of from 0.1 to 8.0 g/10min; (b) melt-mixing said terpolymer in the presence of a peroxide and a bifunctional, unsaturated monomer; and (c) recovering the high melt strength polypropylene.

In another aspect, the present invention is concerned with a polymer film comprising a polymer composition as described herein.

Moreover, the present invention is concerned with a process for producing a polymer film comprising a step of extrusion coating or extrusion laminating a polymer composition as described herein on a polypropylene based substrate,

or between two substrates.

In yet another aspect, the present invention is concerned with the use of a polymer film as described herein, or obtainable via the process as described herein, in packaging applications.

## Detailed description of the invention

*Polypropylene composition*

The present invention relates to a polypropylene (PP) composition comprising a long-chain branched terpolymer of propylene, ethylene and 1-butene (LCB-TER) and having a $MFR_2$, determined according to ISO1133, in a range of from 5.0 to 30.0 g/10min, a melting temperature Tm in a range of from 100 to 150°C and a crystallization temperature Tc in a range of from 90 to 120°C, both determined according to ISO 11357-3.

The PP composition may comprise from 0.1 to 3.0 wt.%, preferably from 0.1 to 2.5 wt.% and even more preferably from 0.5 to 2 wt.% of ethylene of the total weight of the PP composition.

The PP composition may comprise form 3 to 15 wt.%, preferably from 5 to 12 wt.% and even more preferably from 7 to 11 wt.% of 1-butene of the total weight of the PP composition.

The PP composition has a $MFR_2$, determined according to ISO1133, in a range of from 5.0 to 30.0 g/10min, preferably of from 7.5 to 25.0 g/10min and more preferably of from 10.0 to 20.0 g/10min.

Preferably the $MFR_2$ of the PP composition comprising a long chain branched terpolymer of propylene, 1-butene and ethylene is different from the $MFR_2$ of the terpolymer of propylene, 1-butene and ethylene (TER1). More preferably the $MRR_2$ of the PP composition is higher that the $MFR_2$ of TER1.

The PP composition has a melting temperature, Tm, in a range of from 100 to 150°C, preferably of from 110 to 145°C and even more preferably of from 125 to 140°C.

According to a particularly preferred embodiment, the PP composition is polymorphic and has a first and a second melting temperature $Tm_1$ and $Tm_2$, respectively. In such an embodiment, $Tm_1$ is in a range of from 100 to 150°C, preferably of from 110 to 145°C and even more preferably of from 125 to 140°C; and $Tm_2$ is in a range of from 110 to 140°C, preferably of from 115 to 135°C and even more preferably of from 120 to 130°C.

The PP composition has a crystallization temperature, Tc, in a range of from 90 to 120°C, preferably of from 95 to 115°C and even more preferably of from 100 to 110°C.

The PP composition may have a melting enthalpy, Hm, in a range of from 20 to 90 J/g, preferably of from 25 to 85 J/g and even more preferably of from 30 to 80 J/g.

According to a particularly preferred embodiment, the PP composition is polymorphic and has a first and a second melting enthalphy $Hm_1$ and $Hm_2$, respectively. In such an embodiment, $Hm_1$ is in a range of from 5 to 50 J/g, preferably of from 10 to 45 J/g and even more preferably of 15 to 35 J/g; and $Hm_2$ is in a range of from 20 to 70 J/g, preferably of from 30 to 65 J/g and even more preferably of from 40 to 60 J/g. Moreover, it is preferred that the following requirement is met:

$$30 < (Hm_2/(Hm_1+Hm_2))*100 < 80.$$

Preferably, the PP composition has a fraction XHU (xylene hot unsolubles) of less than 1.0 wt.%, more preferably of from 0.01 to 0.75 wt.% and even more preferably of from 0.01 to 0.5 wt.%; determined according to DIN EN 579.

Preferably, the PP composition further has a melt strength F30 in a range of from 4 to 60 cN, more preferably from 5 to 50 cN, even more preferably from 6 to 45 cN; and a melt extensibility v30 in a range of from 180 to 400mm/s, more preferably from 200 to 350 mm/s, even more preferably from 220 to 350 mm/s; F30 and v30 being determined according to ISO 16790:2005.

The PP composition may have a seal initiation temperature (SIT) in a range of from 70 to 120°C, preferably of from 80 to 115°C, more preferably of from 90 to 112°C and even more preferably of from 95 to 112°C.

The long-chain branched terpolymer (LCB-TER) of propylene, ethylene and 1-butene comprised in the polypropylene composition is preferably obtained via polymerization in the presence of a Ziegler-Natta catalyst or a single-site catalyst, more preferably in the presence of a Ziegler-Natta catalyst, and subsequent reactive modification.

In particular, a rather low amount of xylene hot insoluble (XHU) may be obtained via use of a single-site catalyst. However, the use of a single-site catalyst leads typically to 2,1 regio defects in the polymer chain.

It is preferred that the LCB-TER as described herein has 2,1 regio-defects in a range of 0.00 to 1.00 mol%, more preferably in a range of 0.00 to 0.75 %, even more preferably in a range of 0.00 to 0.4 mol% determined by $^{13}$C-NMR spectroscopy as detailed herein below. More specifically, it is preferred that a LCB-TER obtained via polymerization in the presence of a Ziegler-Natta catalyst and subsequent reactive modification has a no 2,1 regio-defects, viz. 0.00 mol% of 2,1 regio-defects. In case of a LCB-TER obtained via polymerization in the presence of a single-site catalyst and subsequent reactive modification, the amount of 2,1 regio defects is preferably in a range of from 0.05 to 1.0 mol%, more preferably in a range of from 0.10 to 0.75 mol% and even more preferably in a range of from 0.10 to 0.40 mol%.More preferably, the PP composition is obtained via the process described herein below.

Aside from the long-chain branched terpolymer of propylene, ethylene and 1-butene (LCB-TER), the PP composition may optionally comprise additives.

The additives (A) can be any additives useful in the technical area of the high melt strength polypropylene (HMS-PP) and its applications. Accordingly the additives (A) to be used in the polypropylene composition of the may include, but are not limited to, stabilizers such as antioxidants (e.g. sterically hindered phenols, phosphites/phosphonites, sulphur containing antioxidants, alkyl radikal scavangers, aromatic amines, hindered amine stabilizers, or blends thereof), metal deactivators (e.g. Irganox MD 1024), or UV stabilizers (e.g. hindered amine light stabilizers). Other typical additives are modifiers such as antistatic or antifogging agents (e.g. ethoxylated amines and amides, or glycerol esters), acid scavengers (e.g. Ca-stearate), blowing agents, cling agents (e.g. polyisobutene), lubriciants and resins (ionomer waxes, PE- and ethylene copolymer waxes, Fischer-Tropsch waxes, Montan-based waxes, Fluoro-based compounds, or paraffin waxes), nucleating agents (e.g. talc, benzoates, phosphorous-based compounds, sorbitoles, nonitol-based compounds, or amide-based compounds), as well as slip and antiblocking agents (e.g. erucamide, oleamide, talc natural silica and synthetic silica, or zeolites).

Preferably the additives (A) are selected from the group consisting of antioxidants (e.g. sterically hindered phenols, phosphites/phosphonites, sulphur containing antioxidants, alkyl radikyl scavangers, aromatic amines, hindered amine stabilizers, or blends thereof), metal deactivators (e.g. Irganox MD 1024), or UV stabilizers (e.g. hindered amine light stabilizers), antistatic or antifogging agents (e.g. ethoxylated amines and amides, or glycerol esters), acid scavengers (e.g. Ca-stearate), blowing agents, cling agents (e.g. polyisobutene), lubriciants and resins (ionomer waxes, PE- and ethylene copolymer waxes, Fischer-Tropsch waxes, Montan-based waxes, Fluoro-based compounds, or paraffin waxes), nucleating agents (e.g. talc, benzoates, phosphorous-based compounds, sorbitoles, nonitol-based compounds, or amide-based compounds), slip agents, antiblocking agents (e.g. erucamide, oleamide, talc natural silica and synthetic silica, or zeolites) and mixtures thereof.

More preferably, the additives comprise at least an antioxidant and an acid scavenger, even more preferably, the acid scavenger is calcium stearate.

Typically the total amount of additives (A) in the polypropylene composition of the invention is in a range of from 0 to 2 wt.% based on the total weight of the polypropylene composition. Preferably, the total amount of additives (A) in the polypropoylene composition is in a range of from 0.01 to 2.0 wt.%, more preferably from 0.1 to 1.0 wt.% and even more preferably in a range of from 0.2 to 0.5 wt.% based on the total weight of the polypropylene composition.

*Process for producing the PP composition*

The present invention provides a process for producing a polypropylene composition as described herein comprising the steps of (a) providing a terpolymer of propylene, 1-butene and ethylene (TER1) having a $MFR_2$, determined according to ISO1133, in a range of from 0.1 to 8.0 g/10min; (b) melt-mixing said terpolymer in the presence of a peroxide and a bifunctional, unsaturated monomer; and (c) recovering the polypropylene composition comprising a long chain branched terpolymer of propylene, 1-butene and ethylene (LCB-TER).

Preferably, the linear terpolymer of propylene, 1-butene and ethylene provided as a starting material in step (a), denoted herein as TER1, is produced in the presence of a Ziegler-Natta catalyst or a single-site catalyst, more preferably in the presence of a Ziegler-Natta catalyst.

Preferably, the amount of comonomer units derived from ethylene in TER1 is in a range of 0.1 to 3.0 wt.% and the amount of comonomer units derived from 1-butene in said terpolymer is in a range of from 3 to 15 wt.% based on the total weight of the terpolymer produced in step (a).

Preferably, TER1 has a $MFR_2$, determined according to ISO1133, in a range of from 1.5 to 6.0 g/10min, more preferably of from 2.5 to 5 g/10min and even more preferably of from 3 to 4 g/10m in.

The $MFR_2$ of the recovered polypropylene composition comprising a long chain branched terpolymer of propylene, 1-butene and ethylene is advantageously different from the MFR2 of TER1.

Preferably the $MFR_2$ of the recovered polypropylene composition comprising a long chain branched terpolymer in step c) is higher than the $MFR_2$ of the TER1 provided in step a).

TER1 preferably comprises from 0.1 to 3.0wt.% of ethylene, more preferably of from 0.1 to 2.5 wt.% and even more preferably of from 0.1 to 2.0 wt.% of ethylene.

TER1 preferably comprises form 3 to 15 wt.%, preferably from 5 to 12 wt.% and even more preferably from 7 to 11 wt.% of 1-butene.

Polymerization processes, which are suitable for producing the propylene polymer are known in the state of the art and comprise at least one polymerization stage, where polymerization is typically carried out in solution, slurry, bulk or gas phase. Typically the polymerization process comprises additional polymerization stages or reactors. In one particular embodiment the process contains at least one bulk reactor zone and at least one gas phase reactor zone, each zone comprising at least one reactor and all reactors being arranged in cascade. In one particularly preferred embodiment the polymerization process comprises at least one bulk reactor and at least one gas phase reactor arranged in that order. In some preferred processes the process comprises one bulk reactor and at least two, e.g. two or three gas phase reactors. The process may further comprise pre- and post-reactors. Pre-reactors comprise typically pre-polymerization reactors. In this kind of processes the use of higher polymerization temperatures 1s preferred in order to achieve specific properties of the polymer. Typical temperatures in these processes are 70 °C or higher, preferably 80 °C or higher, even 85 °C or higher. The higher polymerization temperatures as mentioned above can be applied in some or all reactors of the reactor cascade.

A preferred multistage process is a "loop-gas phase"-process, such as developed by Borealis (known as BORSTAR® technology) described e.g. in patent literature, such as in EP 0 887379, WO 92/12182, WO 2004/000899, WO 2004/111095, WO 99/24478, WO 99/24479, WO 00/68315 or in WO 2021/001176. A further suitable slurry-gas phase process is the Spheripol® process of Basell.

In step (a) a linear terpolymer (TER1), as detailed above, is provided.

The long-chain branching is introduced into the propylene by a reactive modification of the linear terpolymer (TER1). This reactive modification process is also part of the present invention. The reactive modification for producing the long-chain branched propylene copolymer is performed via step (b) of melt-mixing said terpolymer (TER1) in the presence of a peroxide and a bifunctional, unsaturated monomer.

Preferably the peroxide is selected from the group consisting of acyl peroxide, alkyl peroxide, hydroperoxide, perester and peroxycarbonate.

The following peroxides are in particular preferred:

Acyl peroxides: benzoyl peroxide, 4-chlorobenzoyl peroxide, 3-methoxybenzoyl peroxide and/or methyl benzoyl peroxide.

Alkyl peroxides: allyl t-butyl peroxide, 2,2-bis(t-butylperoxybutane), 1,1-bis(tbutylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(tamylperoxy)cyclohexane, t-amyl peroxide, t-butylcumyl peroxide, t-butyl peroxide and/or 1-hydroxybutyl n-butyl peroxide.

Peresters and peroxy carbonates: butyl peracetate, cumyl peracetate, cumyl perpropionate, cyclohexyl peracetate, di-t-butyl peradipate, di-t-butyl perazelate, dit-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, tbutyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also contemplated are mixtures of the above listed peroxides.

According to an even more preferred embodiment, the peroxide comprises or consists of tert-butylperoxy isopropyl carbonate (CAS No. 2372-21-6).

Preferably the peroxide is added in step (b) in an amount of 500 to 10000 ppm, more preferably in an amount of 1500 to 7500 ppm and even more preferably in an amount of 3000 to 5000 ppm based on the weight of said terpolymer; and said bifunctional, unsaturated monomer is added in amount of from 500 to 5000 ppm, more preferably in an amount of 750 to 4000 ppm, even more preferably in an amount of 1000 to 2000 ppm based on the weight of said terpolymer (TER1).

The expression "bifunctional, unsaturated monomer" as used herein relates to monomers comprising two non-aromatic double bonds.

The bifunctional, unsaturated monomer may be selected from conjugated or nonconjugated, linear or branched dienes and preferably contains 4 to 20 carbon atoms, more preferably 4 to 10 carbon atoms. Preferred bifunctional, unsaturated monomers include 1,3-butadiene, isoprene, dimethyl butadiene and divinylbenzene. The most preferred bifunctional, unsaturated monomer is 1,3-butadiene.

Usually not more than three different bifunctional, unsaturated monomers, preferably one bifunctional, unsaturated monomer is used in the process according to the invention.

Preferably said bifunctional, unsaturated monomer is added in step (b) in an amount of from 500 to 5000 ppm, more preferably of from 750 to 4000 and even more preferably of from 1000 to 2000 ppm based on the weight of said terpolymer (TER1).

Typically the peroxide(s) is/ are added together with the bifunctional, unsaturated monomer(s) to the linear terpolymer of propylene, ethylene and 1-butene (TER1). However it is also possible, but less preferred, that the bifunctional, unsaturated monomer(s) is/ are added first to the linear terpolymer of propylene, ethylene and 1-butene (TER1), and subsequently the peroxide, or the other way round, first the peroxide(s) is/ are added to the linear terpolymer of propylene, ethylene and 1-butene (TER1) and subsequent the bifunctional, unsaturated monomer(s).

It should further be understood that the addition of the bifunctional, unsaturated monomer and the peroxide may be achieved at once in the premixing stage or may be split up in two additions, a first addition in the premixing stage and a second addition in the melt-mixing stage. Complete addition of the bifunctional, unsaturated monomer and the peroxide in the melt-mixing stage is preferred.

Concerning the definitions and preferred embodiments of the polymer film, the polypropylene composition, the long-chain branched terpolymer of propylene, ethylene and 1-butene (LCB-TER), the linear terpolymer of propylene, ethylene and 1-butene (TER1) and the additives (A) reference is made to the information provided above.

The linear terpolymer (TER1) can be pre-mixed with the bifunctional, unsaturated compound and peroxide in a powder mixing device, like for example a horizontal mixer with paddle stirrer. The pre-mixing is usually carried out at a temperature of 20 to 100 °C, preferably at a temperature of the polymer powder of 30 to 90 °C, most preferably in the range of 40 to 80 °C. The residence time of the propylene homopolymer and/or copolymer in the pre-mixing step is usually at least 2 minutes, preferably in the range of 5 to 45 minutes, more preferably in the range of 8 to 30 minutes. Following the pre-mixing step, the pre-mixed material is molten and then melt-mixed in a continuous melt mixing device, like, for example, a single screw extruder, a co-kneader, or, preferably, a co-rotating twin screw extruder. Preferably, the melt mixing device includes a feed zone, a melting zone, a kneading zone and a die zone. More preferably, a temperature profile on the extruder is chosen to be 20 - 80°C in the feed barrel, and 170 - 280°C from melting zone to the die plate of the pelletizing system. The screw speed of the melt mixing device can be adjusted depending on the material characteristics. The person skilled in the art is aware of the effects of screw speed on the process and can therefore choose the appropriate screw speed. Generally the screw speed can be adjusted to a range from 100 to 750 rotations per minute (rpm), preferably from 150 to 650 rotations per minute (rpm). Following the melt-mixing step, the resulting long-chain branched terpolymer (LCB-TER) melt can be pelletized, preferably in an underwater pelletizer or, after solidification of one or more strands in a water bath, in a strand pelletizer. In step (c) the polypropylene composition comprising a long chain branched terpolymer of propylene, 1-butene and ethylene (LCB-TER) is recovered; preferably said step (c) comprises recovering the pelletized product defined above.

Preferably, the process further comprises a step wherein one or more additives is/ are added to the composition, preferably in the melt mixing device, preferably close to the die zone, at a point where the long-chain-branching reaction is expected to be mostly completed. The screw design of the melt mixing device is chosen to allow proper mixing of the additives with the melt before pelletising.

Preferably, step (b) comprises melt mixing the terpolymer (TER1), the peroxide and a bifunctional, unsaturated monomer selected from the group consisting of 1,3-butadiene, isoprene, dimethyl butadiene and divinylbenzene, said bifunctional, unsaturated monomer being more preferably 1,3-butadiene; in an extruder at barrel temperature in the range of from 40 to 280°C.

Further suitable methods to obtain the long-chain branched terpolymer (LCB-TER), i.e. a high melt strength terpolymer (HMS-TER), are disclosed in EP 0 787 750, EP 0879 830 A1 and EP 0 890 612 A2.

*Polymer film and process for producing a polymer film*

The invention further relates to a polymer film comprising a polypropylene composition as described herein above.

The polymer film may be selected from the group of coated films, blown films and cast films.

Preferably, the polymer film is a multilayered film.

Preferably, the film comprises at least 90 wt.% and more preferably at least 95 wt.% of polypropylene based on the total weight of the film. Even more preferably, the film consists of polypropylene.

Moreover, according to a particularly preferred embodiment, the polymer film is a multilayer film and consists of polypropylene.

The invention further provides a process for producing a polymer film comprising a step of extrusion coating or extrusion lamination of a polymer composition as described herein above on a polypropylene based substrate or between two substrates.

The preparation of the film is accomplished through techniques known in the art.

For instance, the film can be produced by cast film or blown film technology. In the cast film technology the molten long-chain branched propylene homopolymer and/or copolymer (b-PP) and/or the long-chain branched polypropylene composition (b-PP-C) are/is extruded through a slot extrusion die onto a chill roll to cool the polymer to a solid film. Typically the long-chain branched propylene homopolymer and/or copolymer (b-PP) and/or the long-chain branched polypropylene composition (b-PP-C) are/is firstly compressed and melted in an extruder, it being possible for any additives to be already added to the polymer or introduced at this stage via a masterbatch. The melt is then forced through a flat-film die (slot die) and the extruded film is taken off on one or more take-off rolls, during which it cools and solidifies. It has proven particularly favorable to keep the take-off roll or rolls, by means of which the extruded film is cooled and solidified, at a temperature from 10 to 50 °C, preferably from 10 to 40 °C, more preferably from 12 to 35 °C. The obtained product is an unstretched film which can be if desired, stretched in one or two directions.

In the extrusion coating or extrusion lamination process the melt is forcedthrough a flat die with internal and external restrictors and drawn down to thin layer in a nip consisting of chill roll and pressure roll. In the nip molten film is pressed together with a substrate and cooled down by chill roll.

In the blown film process the long-chain branched propylene homopolymer and/or copolymer (b-PP) and/or the long-chain branched polypropylene composition (b-PP-C) arefis extruded through an annular die and blown into a tubular film by forming a bubble which is collapsed between nip rollers after solidification. The blown extrusion can be preferably effected at a temperature in the range 160 to 240 °C. Cooling can be effected by water or preferably by blowing gas (generally air) at a temperature of 10 to 50 °C to provide a frost line height of 0.5 to 8 times the diameter of the die. The blow up ratio should generally be in the range of from 1.5 to 4, such as for example from 2 to 4, preferably 2.5 to 3.5.

Use

A polymer film as described herein above, or obtainable via the process as described herein above, may be used in packaging applications.

In the following, the present invention is described by way of examples.

**Examples**

Measurement methods

Unless otherwise stated in the description or in the experimental part, the following methods were used for the property determinations of the polymers and/or any sample preparations thereof as specified in the text or experimental part.

a) Melt Flow Rate

The melt flow rate (MFR) is determined according to ISO 1133 and is indicated in g/10min. The MFR is an indication of the flowability and hence the processability of the polymer. The higher the melt flow rate, the lower the viscosity of the polymer. The $MFR_2$ of polypropylene is determined at a temperature of 230 °C and under a load of 2.16 kg.

b) $F_{30}$ melt strength and $v_{30}$ melt extensibility

The test described herein follows ISO 16790:2005. The strain hardening behaviour is determined by the method as described in the article "Rheotens-Master-curves and Drawability of Polymer Melts", M. H. Wagner, Polymer Engineering and Science, Vol. 36, pages 925 to 935. The strain hardening behaviour of polymers is analysed with a Rheotens apparatus (product of Göttfert, Siemensstr.2, 74711 Buchen, Germany) in which a melt strand is elongated by drawing down with a defined acceleration. The Rheotens experiment simulates industrial spinning and extrusion processes. In principle a melt is pressed or extruded through a round die and the resulting strand is hauled off. The stress on the extrudate is recorded as a function of melt properties and measuring parameters (especially the ratio between output and haul-oft speed, practically a measure for the extension rate).

For the results presented below, the materials were extruded with a lab extruder HAAKE Polylab system and a gear pump with cylindrical die (LID = 6.0/2.0 mm). The gear pump was pre-adjusted to a strand extrusion rate of 5 mm/s, and the melt temperature was set to 200 °C. The spinline length between die and Rheotens wheels was 80 mm. At the beginning of the experiment, the take-up speed of the Rheotens wheels was adjusted to the velocity of the extruded polymer strand (tensile force zero). Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec$^2$. The Rheotens was operated in combination with the PC program EXTENS. This is a realtime data-acquisition program, which displays and stores the measured data of tensile force and drawdown speed. The end points of the Rheotens curve (force versus pulley rotary speed) is taken as the $F_{30}$ melt strength and drawability values.

c) Melting temperature, crystallization temperature and melting enthalpy

The melting temperature, $T_m$, is determined by differential scanning calorimetry (DSC) according to ISO 11357-3 with a TA-Instruments 2920 Dual-Cell with RSC refrigeration apparatus and data station. A heating and cooling rate of 10 °C/min is applied in a heat/cool/heat cycle between +23 and +210 °C. The crystallization temperature ($T_c$) is determined from the cooling step while melting temperature ($T_m$) and melting enthalpy ($H_m$) are being determined in the second heating step.

In the case of polymorphic samples, the principle of measurement is the same as above, however, a first and a second melting temperature, $T_{m1}$ and $T_{m2}$, as well as a first and a second melting enthalpy, $H_{m1}$ and $H_{m2}$, may be observed.

d) Xylene hot unsolubles (XHU)

The xylene hot insoluble (XHU) fraction is determined according to EN 579. About 2.0 g of the polymer ($m_p$) are weighted and put in a mesh of metal which is weighted, the total weight being represented by ($m_{p+m}$). The polymer in the mesh is extracted in a soxhlet apparatus with boiling xylene for 5 hours. The eluent is then replaced by fresh xylene and boiling is continued for another hour. Subsequently, the mesh is dried and weighted again ($m_{XHU+m}$). The mass of the xylene hot insoluble ($m_{XHU}$) obtained by the formula $m_{XHU+m} - m_m = m_{XHU}$ is put in relation to the weight of the polymer ($m_p$) to obtain the fraction of xylene insol-ubles $m_{XHU}/m_p$.

e) Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance II 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics.

Approximately 200 mg of material was packed into a 7 mm outer diameter zirconia MAS rotor and spun at 4 kHz. This setup was chosen primarily for the high sensitivity needed for rapid identification and accurate quantification {klimke08, parkinsonQ7, castignolles09}. Standard single-pulse excitation was employed utilising the NOE at short recycle delays of 3 s {pollard04, klimke08} and the RSHEPT decoupling scheme {fillip05, griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (mmmm) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer:

$$B = I_{αB2}/2$$

The amount of consecutively incorporated 1-butene in PBBP sequences was quantified using the integral of the ααB2B2 site at 40.5 ppm accounting for the number of reporting sites per comonomer:

$$BB = 2 * I_{ααB2B2}$$

In presence of BB the value of B must be corrected for the influence of the αB2 sites resulting from BB:

$$B = (I_{αB2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the $S\beta\beta$ sites at 24.3 ppm accounting for the number of reporting sites per comonomer:

$$E = I_{S\beta\beta}$$

If characteristic signals corresponding to consecutive incorporation of ethylene in PEE sequence was observed the $S\beta\delta$ site at 27.0 ppm was used for quantification:

$$EE = I_{S\beta\delta}$$

Characteristic signals corresponding to regio defects were observed {resconi00}.

The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent $S\alpha\beta$ signals at 34.8 ppm and 34.4 ppm respectively and the $T\gamma\gamma$ at 33.7 ppm.

The amount of isolated 2,1-erythro regio defects ($P_{21e\ isolated}$) Was quantified using the integral of the methylene site at 42.4 ppm ($I_{e9}$):

$$P_{21e\ isolated} = I_{e9}$$

If present the amount of 2,1 regio defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio defects:

$$E_{total} = E + EE + P_{E21}$$

The amount of propene was quantified based on the $S\alpha\alpha$ methylene sites at 46.7 ppm including all additional propene units not covered by $S\alpha\alpha$ e.g. the factor $3*P_{21e\ isolated}$ accounts for the three missing propene units from isolated 2, 1-erythro region defects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / (E_{total} + P_{total} + B_{total})$$

$$fE = E_{total} / (E_{total} + P_{total} + B_{total})$$

The mole percent comonomer incorporation was calculated from the mole fractions:

$$B\ [mol\%] = 100 * fB$$

$$E \ [mol\%] = 100 \ ^* \ fE$$

The weight percent comonomer incorporation was calculated from the mole fractions:

$$B \ [wt.\%] = 100 \ ^* \ ( \ fB \ ^* \ 56.11 \ ) \ / \ ( \ (fE \ ^* \ 28.05) + (fB \ ^* \ 56.11) + ((1\text{-}(fE\text{+}fB)) \ ^* \ 42.08) \ )$$

$$E \ [wt.\%] = 100 \ ^* \ ( \ fE \ ^* \ 28.05 \ ) \ / \ ( \ (fE \ ^* \ 28.05) + (fB \ ^* \ 56.11) + ((1\text{-}(fE\text{+}fB)) \ ^* \ 42.08) \ )$$

The mole percent of isolated 2,1-erythro regio defects was quantified with respect to all propene:

$$[21e] \ mol\% = 100 \ ^* \ P_{21e \ isolated} \ / \ P_{total}$$

The mole percent of 2,1 regio defects adjacent to ethylene was quantified with respect to all propene:

$$[E21] \ mol\% = 100 \ ^* \ P_{E21} \ / \ P_{total}$$

The total amount of 2,1 defects was quantified as following:

$$[21] \ mol\% = [21e] + [E21]$$

Characteristic signals corresponding to other types of regio defects (2,1-threo, 3,1 insertion) were not observed {resconi00}.

Literature (as referred to above):

Klimke06: Klimke, K., Parkinson, M., Piel, C., Kaminsky, W., Spiess, H.W., Wilhelm, M., Macromol. Chem. Phys. 2006;207:382.
parkinson07: Parkinson, M., Klimke, K., Spiess, H.W., Wilhelm, M., Macromol. Chem. Phys. 2007;208:2128.
pollard04: Pollard, M., Klimke, K., Graf, R., Spiess, H.W., Wilhelm, M., Sperber, O., Piel, C., Kaminsky, W., Macromolecules 2004;37:813.
Filip05: Filip, X., Tripon, C., Filip, C., J. Mag. Resn. 2005, 176, 239.
griffin07: Griffin, J.M., Tripon, C., Samoson, A., Filip, C., and Brown, S.P., Mag. Res. in Chem. 2007 45, S1, S198.
castignolles09: Castignolles, P., Graf, R., Parkinson, M., Wilhelm, M., Gaborieau, M., Polymer 50 (2009) 2373.
resconi00: Resconi, L., Cavallo, L., Fait, A., Piemontesi, F., Chem. Rev. 2000, 100, 1253.
brandolini01: A.J. Brandolini, D.D. Hills, "NMR spectra of polymers and polymer additives", Marcel Deker Inc., 2000

f) Seal initiation temperature (SIT)

This method is used to determine the sealing window (sealing temperature range) of films. The lower limit (**S**ealing **I**nitiation **T**emperature - SIT) is the sealing temperature at which a sealing force of 5 N is achieved. The test is based on ASTM F1921 - 12 with some deviation. The determination of the force/ temperature curve is continued until thermal failure of the film. In addition to failure mode evaluations described in the standard, additional failure modes are used. The temperature interval is set by default to 5 °C, but can be reduced to 1 °C when the curve shows a sharp increase or decrease in the force values between two temperature steps in order to represent a better curve profile. In the current case, a cast film with thickness of 50 $\mu$m is used (see film formation part).

Standard conditions:

Conditioning time: > 96 h at 23°C, RH 50%
Sealing jaws dimension: 50x5 mm
Sealing jaws shape: flat
Sealing jaws coating: Niptef
Sealing temperature: ambient to 240°C
Sealing temperature interval: 5 °C
Sealing time: 1 sec
Delay time: 30 sec
Sealing pressure: 0.4 $N/mm^2$ (PE); 0.67 $N/mm^2$ (PP)
Grip separation rate: 42 mm/sec
Sealing initiation force: 5 N
Sample width: 25 mm

Results:

The output of this method is a sealing curve.

- Sealing initiation temperature [°C]
- Sealing end temperature [°C]
- Temperature at max. Force [°C]
- Max. Force [N]
- Rel. max. Force [N/cm]
- Energy to max. Force [mJ]
- Total Energy [mJ]
- Total Strain [%]
- Thickness [mm]
- Failure modes (Failure + Type of failure)

Materials

- PP-1/ TER1:
  terpolymer of propylene, ethylene and 1-butene, having a $MFR_2$ of 3.5 g/ 10min, a ethylene content of 1 wt.%, a 1-butene content of 9 wt.%, and a total amount of 2,1-regio defects of 21.0 mol%; further details are given in Table 1.
- PP-2:
  structurally isomeric modified propylene homopolymer having a $MFR_2$ of 3g/ 10min, a melt strength (F30) of 7 cN and a melt extensibility (v30) of 250 mm/ sec; PP-2 is commercially available from Borealis AG.
- Irganox B 215 FF:
  antioxidant, commercially available from BASF.
- Peroxan BIC-75:
  tert-butylperoxy isopropyl carbonate (CAS No. 2372-21-6)., commercially available from Nouryon
- Calcium stearate: Ceasit AV-FI VEG procued by Baerlocher
- 1,3-butadiene: purchased from OMV

Preparation of terpolymer PP11 TER1

The terpolymer were prepared on Borstar pilot plant, with configuration of pre-polymerizor and loop. A 4th generation Ziegler-Natta catalyst is used (details of the catalyst preparation is described in e.g. EP491566, EP591224 and EP586390), donor D (Dicyclopentyldimethoxysilane) is used as external donor. The concentration of H2, C2, C4 in reactor were adjusted by the man skilled in the art, according to the product specifics (C2, C4, MFR). The typical conditions are shown in Table 1.

Table 1

| Prepolymerization | | Terpolymer |
|---|---|---|
| Temperature | °C | 28 |
| Teal/Ti | mol/ mol | 120 |
| Teal/Donor | wt.%/ wt.% | 3 |
| Resisdence time | min | 20 |
| Donor | | D |
| Loop | | |
| Temperature | °C | 67 |
| H2/C3 | mol/ kmol | 3,1 |
| C2/C3 | mol/ kmol | 19.5 |
| Butene feed | kg/ h | 40 |
| MFR$_2$ | g/ 10min | 3.5 |
| C2 | wt. % | 1.0 |
| C4 | wt. % | 9.0 |

Reactive modification

For the preparation of the high melt strength polypropylene composition of inventive example IE1 the propylene terpolymer (TER1) was subjected to reactive modification using Peroxan BIC-75 (tert-butylperoxy isopropyl carbonate, commercially available from Nouryon) as peroxide.

Both the butadiene and the peroxide were premixed with the polymer powder prior to the melt-mixing step in a horizontal mixer with paddle stirrer at a temperature of 65 °C, maintaining an average residence time of 15 minutes. The amount of butadiene and peroxide is based on the total amount of the linear terpolymer (TER1). The pre-mixture was transferred to a co-rotating twin screw extruder of the type Theyson TSK60 having a barrel diameter of 60 mm and an L/D-ratio of 48 equipped with a high intensity mixing screw and a two-step degassing setup. A melt temperature profile with initial temperature T1=20 - 80 °C in the feed zone, T2=240 °C in the melting zone, T3 = 240°C in the kneading zone, and a final temperature T4= 220-230 °C in the die zone, all temperatures being defined as barrel temperatures, was selected. The screw speed was set at 320 rpm.

Following the melt-mixing step, the resulting polymer melt was pelletized with an underwater pelletiser with a process water temperature of 40 °C. Reaction conditions and properties of the resulting composition are summarized in Table 2.

An additive package of antioxidant Irganox B 215 (commercially available from BASF SE), and Calcium stearate was added during the melt-mixing step, at a point close to the die zone of the extruder.

PP-2, which is a commercially available HMS polypropylene (see above), is used as Comparative Example 1.

Film formation

The LCB-PP composition of IE1 was used to prepare films by a cast film process. The production is done on a lab scale Collin 30 cast film line, the film thickness is 50 μm, throughput 10 kg/h, and melt temperature of 250°C. The chill roll is operating at 20°C.

Table 2

| | | IE1 | CE1 |
|---|---|---|---|
| Base polymer powder | | PP-1 (TER1) | PP-2 |
| Polymer powder | wt. % | 97.82 | |
| Antioxidant | ppm | 1300 | |

(continued)

| | | IE1 | CE1 |
|---|---|---|---|
| Ca-Stearate | ppm | 1000 | |
| Peroxide | ppm | 4500 | |
| Butadiene | ppm | 1500 | |
| *Composition properties* | | | |
| $MFR_2$ | g/10min | 13.6 | 10 |
| F30 | cN | 10.7 | 10.8 |
| v30 | mm/s | 234 | 240 |
| XHU | wt. % | 0.02 | 0.33 |
| $Tm_1$ | °C | 134 | 162 |
| Tm2 | °C | 123 | - |
| Tc | °C | 103 | 127 |
| $Hm_1$ | J/g | 26 | 104 |
| Hm2 | J/g | 52 | -/- |
| $(Hm_2/(Hm_1+Hm_2))*100$ | % | 67 | - |
| SIT | °C | 101 | n.m.* |
| * SIT is too high to be measured (e.g. > 130°C) | | | |

It can be seen that by means of the reactive modification process a high melt strength polypropylene composition comprising a long chain branched terpolymer of propylene, ethylene and 1-butene (LCB-TER) can be obtained which shows an improved balance of properties in regard of low melting and crystallization temperatures and high melt strength. In addition, the PP composition according to the present invention exhibits a low SIT, which is beneficial for packaging applications.

**Claims**

1. A polypropylene composition comprising a long-chain branched terpolymer of propylene, ethylene and 1-butene (LCB-TER), wherein the composition has a $MFR_2$, determined according to ISO1133, in a range of from 5 to 30 g/10min, a melting temperature Tm in a range of from 100 to 150°C and a crystallization temperature Tc in a range of from 90 to 120°C, determined according to ISO 11357-3.

2. Polypropylene composition according to claim 1, wherein said terpolymer of propylene, ethylene and 1-butene comprises from 0.1 to 3.0 wt.% of ethylene of the total weight of the polypropylene composition.

3. Polypropylene composition according to anyone of the preceding claims, wherein said terpolymer of propylene, ethylene and 1-butene comprises from 3 to 15 wt.% of 1-butene of the total weight of the polypropylene composition.

4. Polypropylene composition according to anyone of the preceding claims, having a melt strength F30 in a range of from 4 to 60 cN and a melt extensibility v30 in a range of from 180 to 400mm/s, F30 and v30 being determined according to ISO 16790:2005.

5. Polypropylene composition according to anyone of the preceding claims, having a melting temperature Tm in a range of from 125 to 150°C.

6. Process for producing a polypropylene composition according to claim 1 comprising the steps of:

(a) providing a terpolymer of propylene, 1-butene and ethylene (TER1) having a $MFR_2$, determined according

to ISO1133, in a range of from 0.1 to 8.0 g/10min;
(b) melt-mixing said terpolymer in the presence of a peroxide and a bifunctional, unsaturated monomer; and
(c) recovering the polypropylene composition comprising a long chain branched terpolymer of propylene, 1-butene and ethylene (LCB-TER).

7. Process according to claim 6, wherein said terpolymer (TER1) provided in step (a) is produced in the presence of a Ziegler-Natta catalyst or a single-site catalyst, preferably in the presence of a Ziegler-Natta catalyst.

8. Process according to anyone of claims 6 to 7, wherein said step (b) comprises melt mixing the terpolymer (TER1), the peroxide and the bifunctional, unsaturated monomer selected from the group consisting of 1,3-butadiene, isoprene, dimethyl butadiene and divinylbenzene, said bifunctional, unsaturated monomer being preferably 1,3-butadiene; in an extruder with a barrel temperature profile ranging from 20 to 280°C.

9. Process according to anyone of claims 6 to 8, wherein the amount of comonomer units derived from ethylene in the terpolymer (TER1) provided in step (a) is in a range of from 0.1 to 3.0 wt.% and the amount of comonomer units derived from 1-butene in said terpolymer is in a range of from 3 to 15 wt.% based on the total weight of the terpolymer.

10. Process according to anyone of claims 6 to 9, wherein in step (b), said peroxide is added in an amount of 500 to 10000 ppm based on the weight of said terpolymer and said bifunctional, unsaturated monomer is added in amount of from 500 to 5000 ppm based on the weight of said terpolymer (TER1).

11. Polymer film comprising a polypropylene composition according to anyone of claims 1 to 5.

12. Polymer film according to claim 11, wherein said film is a multilayered film.

13. Polymer film according to anyone of claims 11 to 12, wherein said film comprises at least 90 wt.% of polypropylene based on the total weight of the film.

14. Process for producing a polymer film comprising a step of extrusion coating or extrusion laminating a polypropylene composition according to anyone of claims 1 to 5 on a polypropylene based substrate or between two substrates.

15. Use of a polymer film according to anyone of claims 11 to 13 or obtainable via the process according to claim 14 in packaging applications.

Europäisches
Patentamt

European
Patent Office

Office européen
des brevets

# EUROPEAN SEARCH REPORT

**Application Number**

EP 22 21 6773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 292 901 B2 (BOREALIS AG [AT]) 5 April 2022 (2022-04-05) | 1-5,11, 13 | INV. C08F210/06 |
| A | * Comparative Example 3; table 1 * <br> * claims 1-15 * | 6-10,12, 14,15 | |
| Y | US 2020/392321 A1 (GAHLEITNER MARKUS [AT] ET AL) 17 December 2020 (2020-12-17) * paragraphs [0001], [0009], [338ff.] * * tables 1-3 * * claims 16-30 * | 1-15 | |
| Y | EP 3 896 101 A1 (BOREALIS AG [AT]) 20 October 2021 (2021-10-20) * paragraphs [0001], [0138], [181ff.], [0187] * * tables 1, 2 * * claims 1-18 * | 1-15 | |
| A | US 9 290 600 B2 (BOREALIS AG [AT]) 22 March 2016 (2016-03-22) * column 1, line 32 - line 44 * | 1-15 | |

TECHNICAL FIELDS
SEARCHED (IPC)

C08F

The present search report has been drawn up for all claims

| Place of search | Date of completion of the search | Examiner |
|---|---|---|
| Munich | 25 May 2023 | Neumeier, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 6773

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2023

| Patent document cited in search report | | | Publication date | Patent family member(s) | | | Publication date |
|---|---|---|---|---|---|---|---|
| US | 11292901 | B2 | 05-04-2022 | CN | 110678491 | A | 10-01-2020 |
| | | | | EP | 3625274 | A1 | 25-03-2020 |
| | | | | US | 2020109272 | A1 | 09-04-2020 |
| | | | | WO | 2018210477 | A1 | 22-11-2018 |
| US | 2020392321 | A1 | 17-12-2020 | CN | 111032773 | A | 17-04-2020 |
| | | | | EP | 3447088 | A1 | 27-02-2019 |
| | | | | KR | 20200018700 | A | 19-02-2020 |
| | | | | PT | 3447088 | T | 03-02-2020 |
| | | | | RU | 2733454 | C1 | 01-10-2020 |
| | | | | US | 2020392321 | A1 | 17-12-2020 |
| | | | | WO | 2019038135 | A1 | 28-02-2019 |
| EP | 3896101 | A1 | 20-10-2021 | NONE | | | |
| US | 9290600 | B2 | 22-03-2016 | BR | 112015000935 | A2 | 27-06-2017 |
| | | | | CA | 2872671 | A1 | 30-01-2014 |
| | | | | CN | 104508036 | A | 08-04-2015 |
| | | | | EP | 2877534 | A1 | 03-06-2015 |
| | | | | ES | 2634996 | T3 | 02-10-2017 |
| | | | | JP | 6013601 | B2 | 25-10-2016 |
| | | | | JP | 2015522700 | A | 06-08-2015 |
| | | | | KR | 20150028852 | A | 16-03-2015 |
| | | | | KR | 20160062185 | A | 01-06-2016 |
| | | | | US | 2015203621 | A1 | 23-07-2015 |
| | | | | WO | 2014016205 | A1 | 30-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1903070 B1
- EP 1900764 B1
- EP 1903579 B1
- EP 1939230 B1
- WO 2014001394 A1
- WO 2014001394 A
- EP 3018154 A1
- EP 0887379 A
- WO 9212182 A
- WO 2004000899 A
- WO 2004111095 A
- WO 9924478 A
- WO 9924479 A
- WO 0068315 A
- WO 2021001176 A
- EP 0787750 A
- EP 0879830 A1
- EP 0890612 A2
- EP 491566 A
- EP 591224 A
- EP 586390 A

**Non-patent literature cited in the description**

- *CHEMICAL ABSTRACTS,* 2372-21-6
- **M. H. WAGNER.** Rheotens-Master-curves and Drawability of Polymer Melts. *Polymer Engineering and Science,* vol. 36, 925-935
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **CASTIGNOLLES, P. ; GRAF, R. ; PARKINSON, M. ; WILHELM, M. ; GABORIEAU, M.** *Polymer,* 2009, vol. 50, 2373
- **RESCONI, L. ; CAVALLO, L. ; FAIT, A. ; PIEMONTESI, F.** *Chem. Rev.,* 2000, vol. 100, 1253
- **A.J. BRANDOLINI ; D.D. HILLS.** NMR spectra of polymers and polymer additives. Marcel Deker Inc, 2000